(19) Europäisches Patentamt
European Patent Office
Office européen des brevets

(11) **EP 3 340 618 A1**

(12) **EUROPEAN PATENT APPLICATION**

(43) Date of publication:
**27.06.2018 Bulletin 2018/26**

(51) Int Cl.:
**H04N 13/00** $^{(2018.01)}$       **G06T 19/20** $^{(2011.01)}$

(21) Application number: **16306774.7**

(22) Date of filing: **22.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **VARANASI, Kiran**
  **35576 Cesson Sévigné (FR)**
• **LE CLERC, François**
  **35576 Cesson Sévigné (FR)**
• **ALLEAUME, Vincent**
  **35576 Cesson Sévigné (FR)**

(74) Representative: **Huchet, Anne et al**
**TECHNICOLOR**
**1-5, rue Jeanne d'Arc**
**92130 Issy-les-Moulineaux (FR)**

(54) **GEOMETRIC WARPING OF A STEREOGRAPH BY POSITIONAL CONSTRAINTS**

(57)     In a method for consistently editing stereographs, a set of positional constraints ($a_\alpha$, $L_n$, $x_s$, $y_s$, $x_t$, $y_t$) is associated with a source and a target position of at least one constraint point in at least one specified depth layer of each of two specified stereographic images ($a_L$, $a_R$). Those images are warped (S2) by applying these positional constraints for the specified depth layer and a warped stereograph is generated (S3), comprising the two warped images for the specified depth layer.

• Set of two stereographic views to be edited
• Corresponding projection Matrices C
• Initial set $S_{ini}$ of positional contraint parameters

Segmenting — S1

Warping — S2

Generating — S3

Reconstructing — S4

Rendering — S5

Fig.7

# EP 3 340 618 A1

**Description**

**1. Technical Field**

The field of the disclosure relates to stereoscopic displays, which present visual display for both eyes, and also, advantageously, for panoramic stereoscopic displays that fully cover the peripheral fields of vision. There is a wide range of possible application contexts in computer games, visualization of medical content, sport activities, or immersive movies. The disclosure is applicable notably to virtual reality (VR) and augmented reality (AR).

The disclosure pertains to a method for editing a stereograph and to an apparatus for implementing such a method.

**2. Background Art**

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Stereoscopy creates in the mind of a user the illusion of three-dimensional depth, by presenting to each of his eyes a slightly different bidimensional image. The two stereographic (stereo) images, whose pair is called a "stereograph", are then combined in the brain to give the perception of depth.

In order to capture or create a stereograph, it is necessary to take or generate two pictures of a tridimensional scene from different horizontal positions to get a true stereoscopic image pair. This can be done notably with two separate side-by-side cameras, with one camera moved from one position to another between exposures, with one camera and a single exposure by means of an attached mirror or prism arrangement that presents a stereoscopic image pair to the camera lens, or with a stereo camera incorporating two or more side-by-side lenses.

Stereoscopic capture can be extended to create stereoscopic panoramas with large or very large, up to 360 degrees, horizontal field of views. To this purpose, a rig of two cameras separated by eye distance are made to rotate about the centre of the segment that joins them. These cameras have a wide vertical field of view and a narrow horizontal field of view. As the two cameras rotate, horizontal slices of the scene are captured and rendered. The slice renderings are stitched together to form the panoramic stereo image.

The current disclosure also applies to the rendering of synthetic scenes created by computer-generated imagery. Each object making up a synthetic scene consists of a textured 3D (tridimensional) mesh that can be rendered to 2D (bidimensional) image using a virtual camera placed at any point within the synthetic scene and with any desired optical features. Thus, computer-generated imagery allows for the rendering of synthetic stereoscopic or stereoscopic panorama images up to any specification of viewpoint and optical camera parameters.

Despite the increasing interest in the capture or generation of stereoscopic images, few editing techniques are available for editing stereographs consistently across viewpoints. Most of the proposed methods (as illustred by the article "Plenoptic Image Editing" by S. Seitz and K. M. Kutulakos, in International Conference on Computer Vision, 1998) deal with editing texture information, but few are able to change the geometry of the images. Such a geometric warping of the image can be used in particular for magnifying or compressing certain image regions, enabling novel ways of interacting with the displayed content. For example, the window of a captured building in an image can be made bigger or smaller in size, the chest of a person in the image can be made bigger in order to give a more muscular appearance, or, in a medical context, the size of a specific body organ can be magnified for better inspection.

Specifically, a convenient and efficient method for editing conventional 2D images relies on sparse positional constraints, consisting of a set of pairs of a source point location, and a target point location. Each pair enforces the constraint that the pixel at the location of the source point in the original image should move to the location of the corresponding target point in the result image. The change in image geometry is obtained by applying a dense image warping transform to the source image. The transform at each image point is obtained as the result of a computation process that optimizes the preservation of local image texture features, while satisfying the constraints on sparse control points.

However, such an image warping method cannot be applied directly to stereographic representations, notably for immersive renderings, especially in the context of individual stereographic views, because this will result in misalignment in the views and produce jarring visual artefacts.

It would hence be desirable to provide an apparatus and a method that show improvements over the background art.

2

## 3. Summary of the disclosure

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

A particular embodiment of the invention pertains to a method for consistently editing stereographs, the method processing:

- at least one initial stereograph comprising two stereographic images of a tridimensional scene depicted from two corresponding bidimensional views, the two images being segmented into a discrete set of at least two depth layers in a consistent manner across the two images,
- at least one initial set of positional constraint parameters to be applied to at least one specified depth layer within the two images, said positional constraint parameters being associated with a source position and a target position of at least one constraint point in said at least one specified depth layer for each of the two images, said positional constraint parameters determining a warping transformation to be applied to given points within the at least one specified depth layer in each of the two images.

The method comprises:

- warping each of the two images by applying said at least one initial set of positional constraint parameters to the at least one specified depth layer,
- generating an edited stereograph comprising the two warped images for said at least one specified depth layer.

The invention pertains to a method for warping a couple of stereographic images, each referring respectively to the views of the 3D scene, which could be captured by the left and right eyes of a user. By definition, these two images are almost identical and form a single three-dimensional image when viewed through a stereoscope. In the following description, this couple of stereographic images is referred to as "stereograph". Each of the two images is segmented into a discrete set of depth layers in a consistent manner across the two images. In other terms, any image pixel in either of the two stereographic images is uniquely associated with a label Ln indicating its depth layer. In the following description, a depth layer is defined as a bounded area of 3D space in a scene that is located at a depth range positioning and ranking with respect to other depth layers, from a viewer position. Preferably, such a depth layer Ln corresponds to a semantically meaningful entity of the scene. For example, in a movie production workflow, the scene background, each character and each object is a potential scene layer. Once segmented out from a scene, the layers can be combined with layers from other scenes to form new virtual scenes, following a process known as compositing.

The disclosed method relies on a new and inventive approach of warping a stereograph, which comprises applying a geometric warp specified by positional constraints on given depth layers of a couple of stereographic images. The method then allows generating a couple of warped stereographic images that is geometrically consistent in 3D. This couple of warped stereographic images corresponds to the edited stereograph.

In one embodiment, the at least one initial stereograph is of a panoramic type.

Such a panoramic stereograph comprises a set of two stereographic panoramas.

In one embodiment, the method comprises a prior step of determining for each of the 2D views a corresponding matrix of projection of the 3D scene in said view.

Such a matrix of projection allows determining the projection into the 2D view of any point in 3D space. Conversely, given some point on the image of a 2D view, the projection matrix allows determining the viewing ray of this view, i.e. the line of all points in 3D space that project onto this view. Thus, according to this embodiment, calibration data corresponding to each of the views are determined autonomously when implementing the method and do not need to be inputted prior to its implementation. Alternatively, calibration data are provided by an external source, for example the manufacturer of a stereo rig.

In one embodiment, warping comprises computing respectively warped locations of pixels x of each of said at least one specified depth layer of at least one specified image, by solving the system of equations formed by the initial set of positional constraints, in the least squares sense:

$$M_x = \mathrm{Argmin}_M \sum_{i=1}^{m} \frac{1}{|x - s_i|^2}(M(s_i) - t_i)^2$$

wherein m is a number of positional constraints in said each of said at least one specified depth layer,

$s_1, s_2, ..., s_m$ and $t_1, t_2, ..., t_m$ are respectively the bidimensional vertex locations of said at least one source position and target position of said at least one constraint point, and

$M_x$ is an optimal transformation to move any of said pixels x from a source position to a target position in said each of said at least one specified depth layer.

A method according to this embodiment allows optimizing or tending to optimize a warping of the specified images in a given one of the depth layers, when determining the 3D locations of the source point and target point.

In one embodiment, warping implements a bounded biharmonic weights warping model defined as a function of a set of affine transforms, in which one affine transform is attached to each positional constraint.

In one embodiment, the method comprises reconstructing at least one of the warped images by implementing an inpainting method.

When parts of an edited tri-dimensional object have shrunk in the editing process, background areas covered by this object in the original left or right stereographic views become uncovered. The implementation of a reconstruction step allows filling these unknown areas.

In one embodiment, generating the edited stereograph comprises rendering its depth layers from the furthest depth layer to the closest depth layer.

Thus, pixels rendered in inner layers will overwrite a pixel rendered from an outer layer.

In one embodiment, the method comprises a prior step of capturing two calibrated stereographic images with respectively two cameras having an optical center, the at least two depth layers being shaped as concentric cylinders around a theoretical sphere containing both optical centers.

In one embodiment, the method comprises rendering the edited stereograph.

A particular embodiment of the invention pertains to an apparatus for consistently editing stereographs, said apparatus comprising at least one input adapted to receive:

- at least one initial stereograph comprising two stereographic images of a tridimensional scene depicted from two corresponding bidimensional views, the two images being segmented into a discrete set of at least two depth layers in a consistent manner across the two images,
- at least one initial set of positional constraint parameters to be applied to at least one specified depth layer within the two images, said positional constraint parameters being associated with a source position and a target position of at least one constraint point in said at least one specified depth layer for each of the two images, said positional constraint parameters determining a warping transformation to be applied to given points within the at least one specified depth layer in each of the two images.

The apparatus further comprises at least one processor configured for:

- warping each of the two images by applying said at least one initial set of positional constraint parameters to the at least one specified depth layer,
- generating an edited stereograph comprising the two warped images for said at least one specified depth layer.

One skilled person will understand that the advantages mentioned in relation with the method described here below also apply to an apparatus that comprises a processor configured to implement such a method. Since the purpose of the above-mentioned method is to edit a stereograph, without necessarily displaying it, such a method may be implemented on any apparatus comprising a processor configured for processing said method.

In one embodiment, the apparatus comprises means for warping each of the two images by applying said at least one initial set of positional constraint parameters to the at least one specified depth layer, and means for generating an edited stereograph comprising the two warped images for said at least one specified depth layer.

In one embodiment, the apparatus comprises at least one external unit adapted for outputting the edited stereograph.

In one embodiment, the at least one processor is configured for carrying out the above-mentioned method.

In one embodiment, the apparatus comprises a Human/Machine interface configured for inputting the at least one initial set of positional constraint parameters.

In one embodiment, the apparatus comprises a stereoscopic displaying device for displaying the edited stereograph, the apparatus being chosen among a camera, a mobile phone, a tablet, a television, a computer monitor, a games console and a virtual-reality box.

A particular embodiment of the invention pertains to a computer program product downloadable from a communication network and/or recorded on a medium readable by a computer and/or executable by a processor, comprising program code instructions for implementing the above-mentioned method.

Advantageously, the apparatus comprises means for implementing the steps performed in the above-mentioned method, in any of its various embodiments.

While not explicitly described, the present embodiments may be employed in any combination or sub-combination.

## 4. Brief description of the drawings

The present disclosure can be better understood with reference to the following description and drawings, given by way of example and not limiting the scope of protection, and in which:

- **Figure 1** is a schematic representation illustrating the geometric warping of a 3D scene and of the corresponding 2D images,
- **Figure 2** is a schematic representation illustrating a camera projection for a specified view,
- **Figure 3** is a schematic representation illustrating the segmentation of a panoramic stereograph into concentric depth layers,
- **Figure 4** illustrates a pair of rectangular images depicting two stereographic panoramas,
- **Figure 5** is a schematic representation illustrating the projections of a 3D point into left and right stereoscopic views of a 3D scene,
- **Figure 6** is a schematic representation illustrating an image before and after being processed by an editing method according to one embodiment of the invention,
- **Figure 7** is a flow chart illustrating the successive steps implemented when performing a method according to one embodiment of the invention,
- **Figure 8** is a block diagram of an apparatus for editing a stereograph according to one embodiment of the invention.

The components in the figures are not necessarily to scale, emphasis instead being placed upon illustrating the principles of the disclosure.

## 5. Detailed description

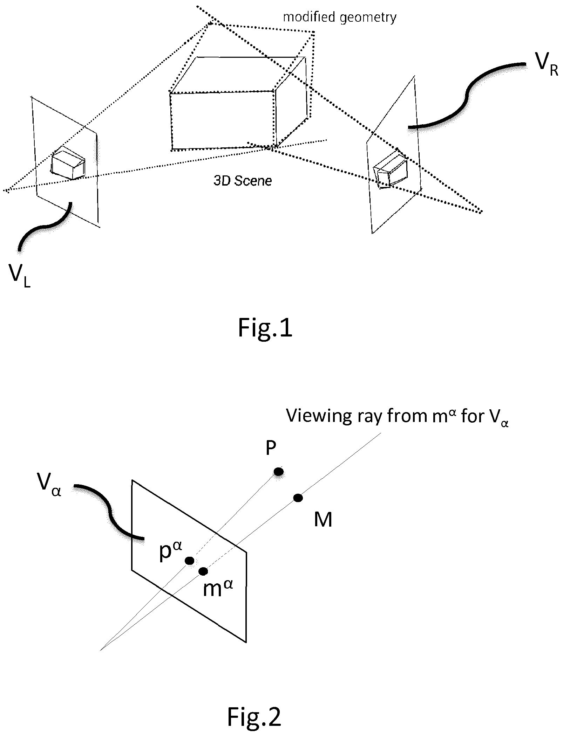

General concepts and specific details of certain embodiments of the disclosure are set forth in the following description and in Figures 1 to 8 to provide a thorough understanding of such embodiments. Nevertheless, the present disclosure may have additional embodiments, or may be practiced without several of the details described in the following description.

### 5.1 General concepts and prerequisites

We assume that the representation of a 3D scene is given by a stereograph (A) comprising two views $(V_L, V_R)$, each refering respectively to the views of this 3D scene, which could be captured by the left and right eyes of a user, or by two adjacent cameras, as illustrated by **Figure 1.**

As illustrated by **Figure 2,** we further assume that these two stereographic views $(V_L, V_R)$, are calibrated, meaning that, for each view $V_\alpha (\alpha = L$ or $R)$, the projection matrix $C_\alpha$ for the view $V_\alpha$ is known. $C_\alpha$ allows to compute the projection $p^\alpha$ into view $V_\alpha$ of any point P in 3D space as $p^\alpha$ is equal to $C_\alpha * P$. Conversely, given some point $m^\alpha$ on the image of view $V_\alpha$, $C_\alpha$ allows to compute the viewing ray from $m^\alpha$ for view $V_\alpha$, i.e. the line of all points M in 3D space that project onto $m^\alpha$ in view $V_\alpha$.

There are several ways, known from the state of art, to compute the camera projection matrices for the views in case of image capture from the real world, a process known as calibration.

A first approach to camera calibration is to place an object in the scene with easily detectable points of interest, such as the corners of the squares in a checkerboard pattern, and with known 3D geometry. The detectability of the points of interest in the calibration object allows to robustly and accurately find their 2D projections on each camera view. From these correspondences and the accurate knowledge of the 3D relative positions of the points of interest, the parameters of the intrinsic and extrinsic camera models can be computed by a data fitting procedure. An example of this family of methods is described in the article "A Versatile Camera Calibration Technique for High-Accuracy 3D Machine Vision Metrology Using Off-The-Shelf TV Cameras and Lenses," by R. Tsai, IEEE Journal on Robotics and Automation, Vols. RA-3, no. 4, pp. 323-344, 1987.

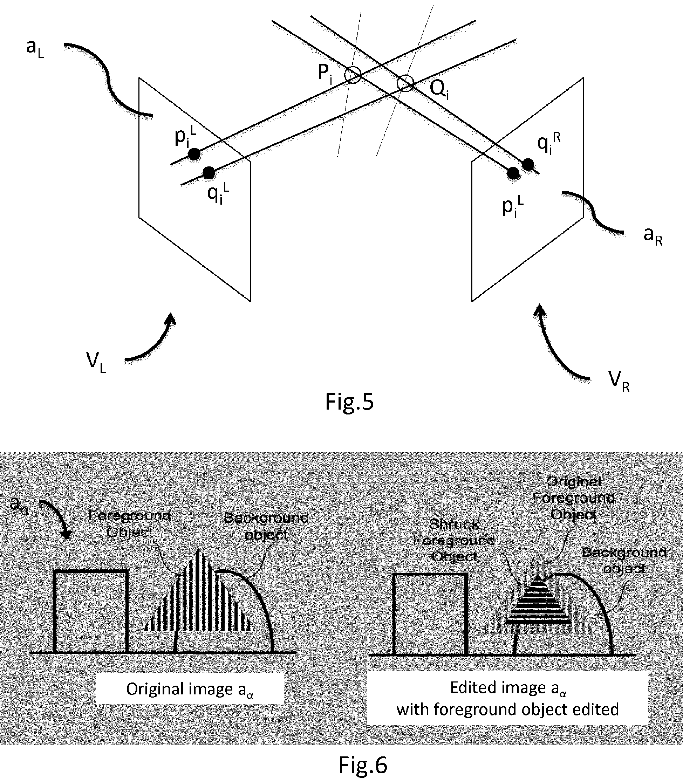

A second approach to camera calibration takes as input a set of 2D point correspondences between pairs of views, i.e., pairs of points $(p_i{}^L, p_i{}^R)$ such that $p_i{}^L$ in view $V_L$ and $p_i{}^R$ in view $V_R$ are the projections of the same 3D scene point $P_i$, as illustrated by **Figure** 5. It is well known from the literature, as illustrated by the article "A Robust Technique for Matching Two Uncalibrated Images Through the Recovery of the Unknown Epipolar Geometry", by Z. Zhang, R. Deriche, O. Faugeras and n. Q.-T. Luo, Artificial Intelligence, vol. 78, no. 1-2, pp. 87-119, 1995, that the fundamental matrix for the pair of views can be computed if at least 8 (eight) such matches are known. Given the projection $m^L$ of some 3D scene point M in view $V_L$, the fundamental matrix defines the epipolar line for $m^R$ in view $V_R$ where the projection of M in this view must lie. Assuming the intrinsic camera parameters are known, either from the camera specifications or from a dedicated calibration procedure, the camera projection matrices for the considered pair of cameras can be computed from an SVD decomposition (Singular Value Decomposition) of the fundamental matrix, as explained in section 9 of the book "Multiple View Geometry in Computer Vision" by R. Hartley and A. Zisserman, Cambridge University Press Ed., 2003.

In case of computer-generated images, the generation of consistent left and right views is further well known to a person having ordinary skills in the art. A virtual camera with desired optical characteristics is placed at a specified location in the virtual scene. Points in the virtual scene within the viewing frustum of the camera are projected through a specified camera projection center to the specified camera retinal plane. Optionally, the retinal plane image can further be deformed to account for distortions of the camera lens and non-square shape of image pixels.

### 5.2 Input data

A method for editing a stereograph in a consistent manner takes as input a stereograph (A) comprising two calibrated stereographic images $(a_L, a_R)$ and an initial set $(S_{ini})$ of positional constraint parameters determining a warping transformation to be applied to a given point within each of these images $(a_L, a_R)$.

In the following description of one embodiment of this method, the stereograph (A) is of a panoramic type, and comprises therefore a set of two stereographic panoramas $(a_L, a_R)$. One will understand that in other embodiments, this stereograph (A) is of a different type without departing from the scope of the invention.

### 5.2.1 Panoramic stereograph (A)

We assume that each stereo panorama is segmented $(S_1)$ into a set of N depth layers $L_n$ ($N \geq 2$) which samples the depth of the 3D scene from the perspective of the concerned view. More precisely, a depth layer $L_n$ is defined as a bounded area of 3D space in a scene that is located at a depth range positioning and ranking with respect to other depth layers, from a viewer position. Preferably, such a depth layer $L_n$ corresponds to a semantically meaningful entity of the scene. In a movie production workflow, the scene background, each character and each object is a potential scene layer. Once segmented out from a scene, the layers can be combined with layers from other scenes to form new virtual scenes, a process known as compositing.

If the 3D scene being shown is a synthetic scene, as in computed-generated imagery, the 3D models of the elements making up the scene directly provide the scene layers. If the scene is captured from the real world using a stereo camera rig, the stereo images can be processed using computer vision algorithms to find point correspondences across views, from which stereo disparity and eventually depth estimates of each pixel in the stereo views can be obtained. In simple situations where the constituent elements of the scene are well separated in depth, it is straightforward to obtain the scene layers using depth thresholding. For more complex scenes, depth thresholding can be combined with texture-based object segmentation or rotoscoping, possibly involving human intervention, in order to assign depth layer labels to all pixels in the stereo views of the scene.

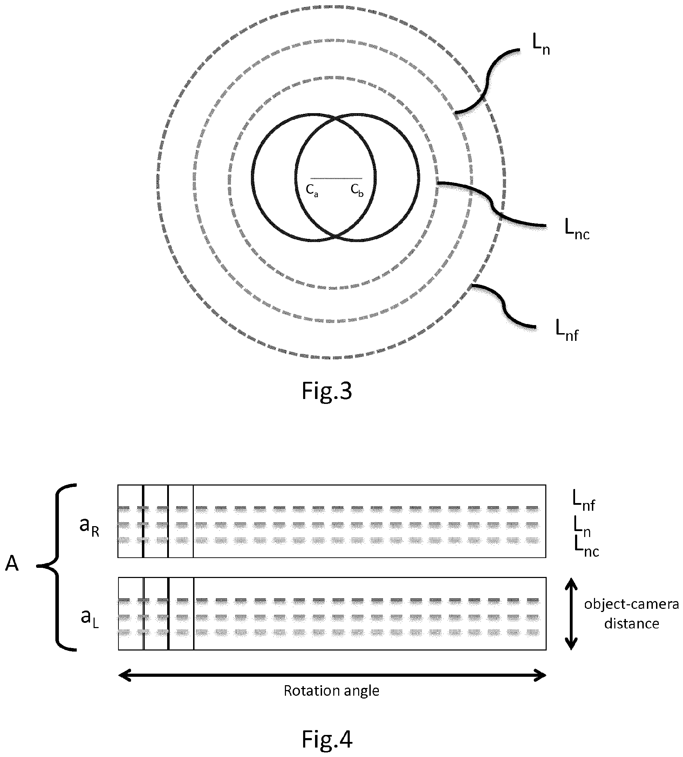

In the context of a panoramic stereograph (A), and as illustrated by **Figure 3,** the depth layers $L_n$ can be represented as concentric cylinders around a common sphere that contains both camera centers $C_a$ and $C_b$ for the stereo view. The depth layers $L_n$ are partially filled cylinders with some holes, nested one inside another from the closest depth layer $L_{nc}$ to the furthest depth layer $L_{nf}$. When all the layers $L_n$ are concatenated and projected onto either of the cameras $C_a$ or $C_b$, we get a completely filled panoramic image $a_\alpha$ without holes. **Figure 4** illustrates a pair of rectangular images $(a_L, a_R)$ depicting the stereographic panoramas captured by each of the camera centers $C_a$ and $C_b$, in which the horizontal axis represents the rotation angle of the cameras, ranging from 0° to 360°, and the vertical axis represents the distance between each of these cameras and the considered object.

Due to the parallax between the two stereographic views $(V_L, V_R)$, each depth layer $L_n$ has some information that is occluded in the current view, but which can be obtained from the other view.

5.2.2 Initial set ($S_{ini}$) of positional constraint parameters

Input data also comprise an initial set $S_{ini}$ of positional constraint parameters ($a_\alpha$, $L_n$, $x_s$, $y_s$, $x_t$, $y_t$) to be applied to at least one specified depth layer ($L_n$) within the two images ($a_L$, $a_R$), wherein ($x_s$, $y_s$) and ($x_t$, $y_t$) are respectively the source pixel coordinates and the target pixel coordinates of at least one constraint point in said specified depth layer ($L_n$) within each image $a_\alpha$ ($\alpha$ = L or R), the positional constraint parameters ($a_\alpha$, $L_n$, $x_s$, $y_s$, $x_t$, $y_t$) determining a warping transformation to be applied to a given point within the specified depth layer ($L_n$) in each of the two images ($a_L$, $a_R$).

In practice, these constraint parameters ($a_\alpha$, $L_n$, $x_s$, $y_s$, $x_t$, $y_t$) can be specified manually, by simple point clicking operations on the image. Alternatively, they can be obtained by a computer algorithm that detects feature points in the image and applies contextually meaningful geometric transformations to these points.

The method then generates new panoramic images ($a_L$, $a_R$) for both the left and the right views ($V_L$, $V_R$), by warping each of the views in a geometrically consistent manner such that the projective transformations between the views are respected.

**5.3 Method for consistently editing a stereograph according to one particular embodiment**

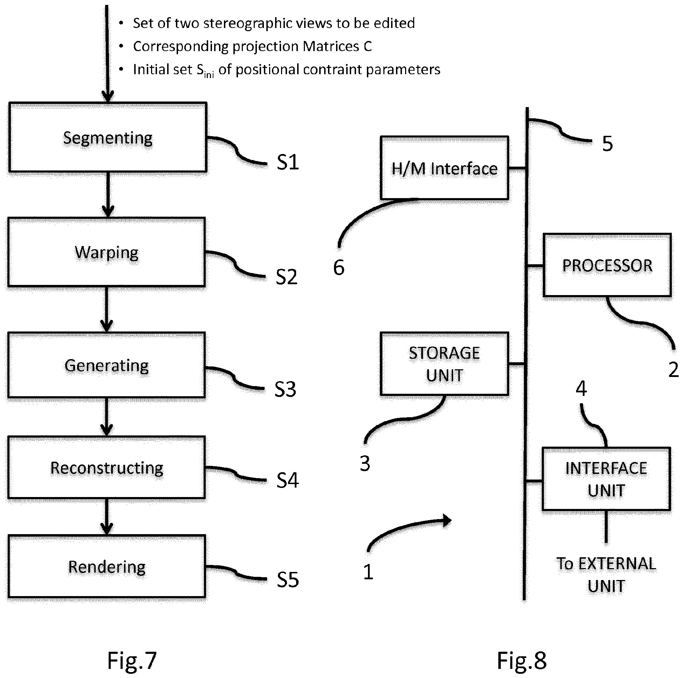

As illustrated by **Figure 7,** the method for editing a stereograph A according to one particular embodiment comprises at least 2 (two) steps:

- warping ($S_2$) each of the two images ($a_L$, $a_R$) by applying said at least one initial set ($S_{ini}$) of positional constraint parameters ($a_\alpha$, $L_n$, $x_s$, $y_s$, $x_t$, $y_t$) to the at least one specified depth layer $L_n$,
- generating ($S_3$) an edited stereograph comprising the two warped images for said at least one depth layer $L_n$.

In the following, each of the steps implemented by the method are described in greater detail.

In a pre-processed step, each stereo panorama ($a_L$, $a_R$) is first segmented into a set of n depth layers $L_n$, which samples the depth of the 3D scene from the perspective of the stereographic views ($V_L$, $V_R$). In computer-generated imagery, the depth layers $L_n$ can alternatively be retrieved directly from the 3D models of the objects making up the synthetic scene.

5.3.1 Geometric warping transformation (S2) of each layer $L_n$

A geometric warping transformation is then applied to each concerned one among the depth layers $L_n$.

In this matter, we assume that for m different warping constraints (corresponding to source $P_i$, target $Q_i$, with i = 1, 2... m), 3D positional constraint parameters ($a_\alpha$, $L_n$, $x_s$, $y_s$, $x_t$, $y_t$) are initially specified by the user in at least one depth layer $L_n$ of each of the two specified views ($V_L$ and $V_R$). Such constraints are representative of projections ($p_i^\alpha$, $q_i^\alpha$) of the 3D source points $P_i$, and target points $Q_i$ on the right and left view. In variant embodiments, those constraint parameters are derived automatically from physics of from semantic relevance.

Considering one given view $V_\alpha$, let there be a set of m positional constraints, given by 2D vertex locations in the initial and warped images as $s_1$, $s_2$, ..., $s_m$ and $t_1$, $t_2$, ..., $t_m$ respectively. Each point pair constraint ($s_i$, $t_i$) is associated with the depth layer located at $s_i$ in the view. A corresponding set of constraints is defined by the user in the other stereo view, in such a way that for each $s_i$ and $t_i$ in one view, the corresponding $s_i$ and $t_i$ in the other is associated with the same semantic point in the 3D scene.

For each layer $L_n$ affected by the warping, an optimal warping transformation $M_x$ is computed in the specified view $V_\alpha$, based on all constraint point pairs falling into this depth layer. The same operation is performed in the other view with the corresponding constraint point pairs.

The computation of $M_x^\alpha$ may take various forms, depending on the choice of the optimization criterion and the model for the transform. Advantageously, one of the Moving Least Squares energies and associated constrained affine models for $M_x^\alpha$ proposed in the article "Image deformation using moving least squares," by S. Schaefer, T. McPhail and J. Warren, in SIGGRAPH, 2006, is used to compute $M_x^\alpha$. For instance, $M_x^\alpha$ is chosen to be an affine transform consisting of a linear transformation $A_x^\alpha$ and a translation $T_x^\alpha$:

$$M_x^\alpha(x) = A_x^\alpha x + T_x^\alpha,$$

and is defined in the concerned layer $L_n$, for every point x different from a $p_i^\alpha$, as the solution to the following optimization problem:

$$M_x^\alpha = \text{Argmin}_M \sum_{i=1}^{m} \frac{1}{|x - p_i^\alpha|^2} |M(p_i^\alpha) - q_i^\alpha|^2$$

$M_x^\alpha(p_i^\alpha)$ is defined to be equal to $q_i^\alpha$. The minimization of the right term in the above equation is a quadratic programming problem whose solution can be obtained using techniques well known from the state of art (such a solution being possibly based on an iterative process associated with a predefined convergence threshold).

The invention is not limited to the above choice of warping model and optimality criterion. For example, the bounded biharmonic weights warping model proposed in the article "Bounded Biharmonic Weights for Real-Time Deformation," A. Jacobson, I. Baran, J. Popovic and O. Sorkine, in SIGGRAPH, 2011, could be used in place of the moving least squares algorithm. In this approach, an affine transform over the whole image is associated to each user-specified positional constraint, and the image warp is computed as a linear combination of these affine transforms. The optimal warping transformation is defined as the one for which the weights of the linear combination are as constant as possible over the image, subject to several constraints. In particular, the warp at the location of each positional constraint is forced to coincide with the affine transform associated with the constraint. The resulting optimization problem is discretized using finite element modelling and solved using sparse quadratic programming.

The biharmonic warping model needs an affine transform to be specified at the location of each positional constraint. A first option is to restrict this affine transform to the specified translation from the source to the target constraint point. Alternatively, the affine transform could be computed by least-squares fitting an affine transform for the considered location, using all other available positional constraints as constraints for the fitting.

### 5.3.2 Generation ($S_3$) of two warped panoramic images

Since the camera location in the stereographic pair is completely calibrated with respect to the cylindrical layer representation of 3D geometry, each layer $L_n$ (n = 1...N) can be projected uniquely to generate a warped panoramic image around the camera centers ($C_a$, $C_b$). In one embodiment, such a generation is conducted according to the painter method. This method consists in rendering the concentric cylindrical layers $L_n$ onto each of the camera views, by starting from the outer most layer $L_{nf}$, before rendering the inner layers consecutively until the closest depth layer $L_{nc}$. Thus, pixels rendered in inner layers will overwrite a pixel rendered from an outer layer.

### 5.3.3 Image reconstruction ($S_4$)

When parts of the edited object have shrunk in the editing process, background areas covered by this object in the original left or right stereographic views ($V_L$, $V_R$) become uncovered. The texture in these areas is unknown and needs to be reconstructed.

**Figure 6** depicts an image $a_\alpha$ of a toy scene made up of two depth layers, a background consisting of a half-rectangle and a half-ellipse, and a triangle object in the foreground. The image $a_\alpha$ could be either taken from the left view $V_L$ or the right view $V_R$ of a stereograph A. The left-hand part of **Figure 6** shows the original image $a_\alpha$ before editing. On the right-hand part of **Figure 6,** the same image $a_\alpha$ has been edited using the previously described steps of geometric warping and stereo image generation. The editing operation in this example has resulted in the shrinkage of the foreground triangle object. As a result, an area of the background that was occluded by the foreground triangle now becomes visible. This area is represented with a vertical line pattern on the right-hand part of **Figure 6.** The texture contents of this disoccluded area cannot be copied from the original image $a_\alpha$ and needs to be reconstructed.

So-called "image inpainting" techniques known from the state of art are used for the reconstruction. Such a technique is described in the technical report MSR-TR-2004-04 (by Microsoft Research) called "PatchWorks: Example-Based Region Tiling for Image Editing", by P. Pérez, M. Gangnet and A. Blake. These techniques fill the texture of a missing area in an image (the "hole") starting from the boundary pixels in the hole and gradually filling the hole texture to its center.

To this purpose, the image is split into possibly overlapping small rectangular patches of constant size. At a given stage of the algorithm, a patch on the boundary of the region of the original hole yet to be filled is considered. This patch will hereafter be referred to as "patch to be filled". It should hold both known pixels, on the outside of the boundary, and not yet reconstructed pixels, on the inside. Within a predefined subset of all known patches in the original image, hereafter referred to as "example patches", the patch most resembling the known area of the patch to be filled is selected, and its pixels are copied onto the unknown image area of the patch to be filled. This operation is repeated until all patches in the hole have been filled. The reconstruction is then complete.

The similarity between the example patches and the patch to be filled is determined on the basis of a texture similarity metrics, which is evaluated only over the part of the patch to be filled for which texture is known. The selected example patch maximizes this computed similarity. This strategy minimizes the amount of texture discontinuities inside the reconstructed hole and at its boundaries, and eventually provides a reconstruction that is visually plausible, although of course different in general from the ground-truth texture that would have been observed on the actual background.

The rendering (S5) can thereby be carried out.

### 5.4 Description of an apparatus for consistently editing a stereograph

**Figure 8** is a schematic block diagram illustrating an example of an apparatus 1 for editing a stereograph, according to one embodiment of the present disclosure. Such an apparatus 1 includes a processor 2, a storage unit 3 and an interface unit 4, which are connected by a bus 5. Of course, constituent elements of the computer apparatus 1 may be connected by a connection other than a bus connection using the bus 5.

The processor 2 controls operations of the apparatus 1. The storage unit 3 stores at least one program to be executed by the processor 2, and various data, including stereographic and positional constraint data, parameters used by computations performed by the processor 2, intermediate data of computations performed by the processor 2, and so on. The processor 2 may be formed by any known and suitable hardware, or software, or by a combination of hardware and software. For example, the processor 2 may be formed by dedicated hardware such as a processing circuit, or by a programmable processing unit such as a CPU (Central Processing Unit) that executes a program stored in a memory thereof.

The storage unit 3 may be formed by any suitable storage or means capable of storing the program, data, or the like in a computer-readable manner. Examples of the storage unit 3 include non-transitory computer-readable storage media such as semiconductor memory devices, and magnetic, optical, or magneto-optical recording media loaded into a read and write unit. The program causes the processor 2 to perform a process for editing the stereograph, according to an embodiment of the present disclosure as described above with reference to **Figure 8.**

The interface unit 4 provides an interface between the apparatus 1 and an external apparatus. The interface unit 4 may be in communication with the external apparatus via cable or wireless communication. In this embodiment, the external apparatus may be a stereographic-capturing device. In this case, stereographic images can be inputted from the capturing device to the apparatus 1 through the interface unit 4, and then stored in the storage unit 3. Alternatively, the external apparatus is a content generation device adapted to generate virtual stereographs.

The apparatus 1 and the stereographic-capturing device may communicate with each other via cable or wireless communication.

The apparatus 1 may comprise a displaying device or be integrated into any display device for displaying the edited stereograph.

The apparatus 1 may also comprise a Human/Machine Interface 6 configured for allowing a user inputting the at least one initial set $S_{ini}$ of positional constraint parameters.

Although only one processor 2 is shown on **Figure 8,** one will understand that such a processor may comprise different modules and units embodying the functions carried out by the apparatus 1 according to embodiments of the present disclosure, such as:

- A module for warping ($S_2$) each of the two images ($a_L$, $a_R$) by applying said at least one initial set ($S_{ini}$) of positional constraint parameters ($a_\alpha$, $L_n$, $x_s$, $y_s$, $x_t$, $y_t$) to the specified depth layer $L_n$,
- A module for generating ($S_3$) one edited stereograph comprising the two warped images.

These modules may also be embodied in several processors 2 communicating and co-operating with each other.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, microcode, and so forth), or an embodiment combining software and hardware aspects.

When the present principles are implemented by one or several hardware components, it can be noted that a hardware component comprises a processor that is an integrated circuit such as a central processing unit, and/or a microprocessor, and/or an Application-specific integrated circuit (ASIC), and/or an Application-specific instruction-set processor (ASIP), and/or a graphics processing unit (GPU), and/or a physics processing unit (PPU), and/or a digital signal processor (DSP), and/or an image processor, and/or a coprocessor, and/or a floating-point unit, and/or a network processor, and/or an audio processor, and/or a multi-core processor. Moreover, the hardware component can also comprise a baseband processor (comprising for example memory units, and a firmware) and/or radio electronic circuits (that can comprise antennas), which receive or transmit radio signals. In one embodiment, the hardware component is compliant with one or more standards such as ISO/IEC 18092 / ECMA-340, ISO/IEC 21481 / ECMA-352, GSMA, StoLPaN, ETSI / SCP (Smart Card Platform), GlobalPlatform (i.e. a secure element). In a variant, the hardware component is a Radio-frequency identification (RFID) tag. In one embodiment, a hardware component comprises circuits that enable Bluetooth communications, and/or Wi-Fi communications, and/or Zigbee communications, and/or USB communications and/or Firewire communications and/or NFC (for Near Field) communications.

Furthermore, aspects of the present principles can take the form of a computer readable storage medium. Any combination of one or more computer readable storage medium(s) may be utilized.

Thus for example, it will be appreciated that any flow charts, flow diagrams, state transition diagrams, pseudo code, and the like represent various processes which may be substantially represented in computer readable storage media and so executed by a computer or a processor, whether or not such computer or processor is explicitly shown.

Although the present disclosure has been described with reference to one or more examples, a skilled person will recognize that changes may be made in form and detail without departing from the scope of the disclosure and/or the appended claims.

**Claims**

1. Method for consistently editing stereographs (A), the method processing:

   • at least one initial stereograph (A) comprising two stereographic images ($a_L$, $a_R$) of a tridimensional scene depicted from two corresponding bidimensional views ($V_L$, $V_R$), the two images ($a_L$, $a_R$) being segmented into a discrete set of at least two depth layers ($L_n$) in a consistent manner across the two images ($a_L$, $a_R$),
   • at least one initial set ($S_{ini}$) of positional constraint parameters ($a_\alpha$, $L_n$, $x_s$, $y_s$, $x_t$, $y_t$) to be applied to at least one specified depth layer ($L_n$) within the two images ($a_L$, $a_R$), said positional constraint parameters ($a_\alpha$, $L_n$, $x_s$, $y_s$, $x_t$, $y_t$) being associated with a source position and a target position of at least one constraint point in said at least one specified depth layer ($L_n$) for each of the two images ($a_L$, $a_R$), said positional constraint parameters ($a_\alpha$, $L_n$, $x_s$, $y_s$, $x_t$, $y_t$) determining a warping transformation to be applied to given points within the at least one specified depth layer ($L_n$) in each of the two images ($a_L$, $a_R$),

   the method comprising:

   • warping ($S_2$) each of the two images ($a_L$, $a_R$) by applying said at least one initial set ($S_{ini}$) of positional constraint parameters ($a_\alpha$, $L_n$, $x_s$, $y_s$, $x_t$, $y_t$) to the at least one specified depth layer ($L_n$),
   • generating ($S_3$) an edited stereograph comprising the two warped images for said at least one specified depth layer ($L_n$).

2. The method of claim 1, wherein the at least one initial stereograph (A) is of a panoramic type.

3. The method of claim 1 or 2, wherein it comprises a prior step of determining for each of the 2D views a corresponding matrix of projection of the 3D scene in said view.

4. The method of any of claims 1 to 3, wherein said warping ($S_2$) comprises computing respective warped locations of pixels x of each of said at least one specified depth layer ($L_n$) of at least one specified image ($a_\alpha$), by solving the system of equations formed by the initial set ($S_{ini}$) of positional constraints ($a_\alpha$, $L_n$, $x_s$, $y_s$, $x_t$, $y_t$), in the least squares sense:

$$M_x = \mathrm{Argmin}_M \sum_{i=1}^{m} \frac{1}{|x - s_i|^2} (M(s_i) - t_i)^2$$

   wherein m is a number of positional constraints in said each of said at least one specified depth layer ($L_n$),
   $s_1$, $s_2$, ..., $s_m$ and $t_1$, $t_2$, ..., $t_m$ are respectively the bidimensional vertex locations of said at least one source position and target position of said at least one constraint point, and
   $M_x$ is an optimal transformation to move any of said pixels x from a source position to a target position in said each of said at least one specified depth layer ($L_n$).

5. The method of any of claims 1 to 3, wherein said warping ($S_2$) implements a bounded biharmonic weights warping model defined as a function of a set of affine transforms, in which one affine transform is attached to each positional constraint.

6. The method of any of claims 1 to 5, wherein it comprises reconstructing ($S_4$) at least one of the warped images by implementing an inpainting method.

7. The method of any of claims 1 to 6, wherein generating ($S_3$) the edited stereograph comprises rendering its depth layers ($L_n$) from the furthest depth layer ($L_{nf}$) to the closest depth layer ($L_{nc}$).

8. The method of any of claims 1 to 7, wherein it comprises a prior step of capturing two calibrated stereographic images ($a_L$, $a_R$) with respectively two cameras having an optical center ($C_a$, $C_b$), the at least two depth layers ($L_n$) being shaped as concentric cylinders around a theoretical sphere containing both optical centers ($C_a$, $C_b$).

9. The method of any of claims 1 to 8, wherein it comprises rendering ($S_5$) the edited stereograph (A).

10. An apparatus (1) for consistently editing stereographs (A), said apparatus comprising at least one input adapted to receive:

   • at least one initial stereograph (A) comprising two stereographic images ($a_L$, $a_R$) of a tridimensional scene depicted from two corresponding bidimensional views ($V_L$, $V_R$), the two images ($a_L$, $a_R$) being segmented into a discrete set of at least two depth layers ($L_n$) in a consistent manner across the two images ($a_L$, $a_R$),
   • at least one initial set ($S_{ini}$) of positional constraint parameters ($a_\alpha$, $L_n$, $x_s$, $y_s$, $x_t$, $y_t$) to be applied to at least one specified depth layer ($L_n$) within the two images ($a_L$, $a_R$), said positional constraint parameters ($a_\alpha$, $L_n$, $x_s$, $y_s$, $x_t$, $y_t$) being associated with a source position and a target position of at least one constraint point in said at least one specified depth layer ($L_n$) for each of the two images ($a_L$, $a_R$), said positional constraint parameters ($a_\alpha$, $L_n$, $x_s$, $y_s$, $x_t$, $y_t$) determining a warping transformation to be applied to given points within the at least one specified depth layer ($L_n$) in each of the two images ($a_L$, $a_R$),

   said apparatus (1) further comprising at least one processor (2) configured for:

   • warping ($S_2$) each of the two images ($a_L$, $a_R$) by applying said at least one initial set ($S_{ini}$) of positional constraint parameters ($a_\alpha$, $L_n$, $x_s$, $y_s$, $x_t$, $y_t$) to the at least one specified depth layer ($L_n$),
   • generating ($S_3$) an edited stereograph comprising the two warped images for said at least one specified depth layer ($L_n$).

11. The apparatus (1) of claim 10, wherein said at least one processor is configured for carrying out a method corresponding to any of claims 1 to 9.

12. The apparatus (1) of claim 10 or 11, wherein it comprises a Human/Machine interface (3) configured for inputting the at least one initial set ($S_{ini}$) of positional constraint parameters ($a_\alpha$, $L_n$, $x_s$, $y_s$, $x_t$, $y_t$).

13. The apparatus (1) of any of claims 10 to 12, comprising a stereoscopic displaying device for displaying the edited stereograph, the apparatus (1) being chosen among a camera, a mobile phone, a tablet, a television, a computer monitor, a games console and a virtual-reality box.

14. A computer program product downloadable from a communication network and/or recorded on a medium readable by a computer and/or executable by a processor, comprising program code instructions for implementing a method according to any of claims 1 to 9.

modified geometry

$V_R$

3D Scene

$V_L$

## Fig.1

Viewing ray from $m^\alpha$ for $V_\alpha$

P

$V_\alpha$

M

$p^\alpha$

$m^\alpha$

## Fig.2

Fig.3

Rotation angle

Fig.4

$a_L$

$P_i$  $Q_i$

$p_i{}^L$

$q_i{}^L$

$q_i{}^R$

$p_i{}^L$

$a_R$

$V_L$

$V_R$

Fig.5

$a_\alpha$

Foreground Object

Background object

Original image $a_\alpha$

Original Foreground Object

Shrunk Foreground Object

Background object

Edited image $a_\alpha$
with foreground object edited

Fig.6

- Set of two stereographic views to be edited
- Corresponding projection Matrices C
- Initial set $S_{ini}$ of positional contraint parameters

| Segmenting | S1 |

| Warping | S2 |

| Generating | S3 |

| Reconstructing | S4 |

| Rendering | S5 |

Fig.7

H/M Interface — 5

PROCESSOR

2

STORAGE UNIT

3

INTERFACE UNIT

4

To EXTERNAL UNIT

6

1

Fig.8

# EUROPEAN SEARCH REPORT

**Application Number**

EP 16 30 6774

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/169722 A1 (HWANG KYU YOUNG [KR] ET AL) 5 July 2012 (2012-07-05) | 1,2,7, 9-14 | INV. H04N13/00 G06T19/20 |
| Y | * paragraphs [0027] - [0042], [0063] - [0065], [0067] - [0078], [0086] - [0197]; figures 1,4,6-10 * | 3-5 | |
| X | US 2013/057644 A1 (STEFANOSKI NIKOLCE [DE] ET AL) 7 March 2013 (2013-03-07) | 1-3,6-14 | |
| Y | * abstract; figures 1,2,9-14,17,23 * * paragraphs [0063] - [0064], [0083], [0085], [0092] - [0093], [0099] - [0100], [0135], [0141] * | 4,5 | |
| Y | TSAI R Y: "A versatile camera calibration technique for high-accuracy 3D machine vision metrology using off-the-shelf TV cameras and lenses", IEEE JOURNAL ON ROBOTICS AND AUTOMATION, IEEE, USA, vol. RA-3, no. 4, 1 August 1987 (1987-08-01), pages 323-344, XP002633633, ISSN: 0882-4967, DOI: 10.1109/JRA.1987.1087109 | 3 | TECHNICAL FIELDS SEARCHED (IPC) H04N G06T |
| A | * the whole document * | 8 | |
| Y | SCOTT SCHAEFER ET AL: "Image deformation using moving least squares", INTERNATIONAL CONFERENCE ON COMPUTER GRAPHICS AND INTERACTIVE TECHNIQUES, ACM SIGGRAPH 2006 PAPERS, BOSTON, MASSACHUSETTS, ACM, NEW YORK, NY, USA, 1 July 2006 (2006-07-01), pages 533-540, XP058326278, DOI: 10.1145/1179352.1141920 ISBN: 978-1-59593-364-5 * the whole document * | 4 | |

-/--

The present search report has been drawn up for all claims

| Place of search | Date of completion of the search | Examiner |
|---|---|---|
| The Hague | 16 June 2017 | Mao, Pauline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 30 6774

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ALEC JACOBSON ET AL: "Bounded biharmonic weights for real-time deformation", ACM SIGGRAPH 2011 PAPERS, SIGGRAPH '11, VANCOUVER, BRITISH COLUMBIA, CANADA, 7 August 2011 (2011-08-07), pages 1-8, XP055347949, New York, New York, USA DOI: 10.1145/1964921.1964973 ISBN: 978-1-4503-0943-1 * the whole document * ----- | 5 | |
| | | | **TECHNICAL FIELDS SEARCHED (IPC)** |

The present search report has been drawn up for all claims

| Place of search | Date of completion of the search | Examiner |
|---|---|---|
| The Hague | 16 June 2017 | Mao, Pauline |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

page 2 of 2

## ANNEX TO THE EUROPEAN SEARCH REPORT
## ON EUROPEAN PATENT APPLICATION NO.

EP 16 30 6774

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2017

| Patent document cited in search report | Publication date | Patent family member(s) | Publication date |
|---|---|---|---|
| US 2012169722 A1 | 05-07-2012 | JP 5789185 B2<br>JP 2012141975 A<br>KR 20120078924 A<br>US 2012169722 A1 | 07-10-2015<br>26-07-2012<br>11-07-2012<br>05-07-2012 |
| US 2013057644 A1 | 07-03-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. SEITZ ; K. M. KUTULAKOS.** Plenoptic Image Editing. *International Conference on Computer Vision,* 1998
- **R. TSAI.** A Versatile Camera Calibration Technique for High-Accuracy 3D Machine Vision Metrology Using Off-The-Shelf TV Cameras and Lenses. *IEEE Journal on Robotics and Automation,* 1987, vol. RA-3 (4), 323-344
- **Z. ZHANG ; R. DERICHE ; O. FAUGERAS ; N. Q.-T. LUO.** A Robust Technique for Matching Two Uncalibrated Images Through the Recovery of the Unknown Epipolar Geometry. *Artificial Intelligence,* 1995, vol. 78 (1-2), 87-119
- **R. HARTLEY ; A. ZISSERMAN.** Multiple View Geometry in Computer Vision. Cambridge University Press Ed, 2003
- **S. SCHAEFER ; T. MCPHAIL ; J. WARREN.** Image deformation using moving least squares. *SIGGRAPH,* 2006
- **A. JACOBSON ; I. BARAN ; J. POPOVIC ; O. SORKINE.** Bounded Biharmonic Weights for Real-Time Deformation. *SIGGRAPH,* 2011
- **P. PÉREZ ; M. GANGNET ; A. BLAKE.** *PatchWorks: Example-Based Region Tiling for Image Editing*